# EUROPÄISCHE PATENTSCHRIFT

(11) **EP 2 592 196 B1**
(45) Veröffentlichungstag und Bekanntmachung des Hinweises auf die Patenterteilung: **08.10.2014**
(21) Anmeldenummer: 11188793.1
(22) Anmeldetag: 11.11.2011
(51) Int. Cl.: E04D 12/00, B32B 27/40, B32B 27/12, B32B 5/02, B32B 5/08, B32B 3/06, B32B 3/08

(54) **Wasserdichte Unterdeckbahn für ein geneigtes Dach**
Waterproof roof underlay for a sloping roof
Revêtement de sous-toiture étanche pour un toit incliné

(43) Veröffentlichungstag der Anmeldung: 15.05.2013
(73) Patentinhaber: Caplast Kunststoffverarbeitungs GmbH, 59394 Nordkirchen (DE)
(72) Erfinder: Schaefer, Fredrik, 53125 Bonn (DE); Mones, Roland, 50181 Bedburg (DE)
(74) Vertreter: HOFFMANN EITLE

(56) Entgegenhaltungen:
- EP-A1- 2 256 266
- DE-U1-202010 000 934
- DE-U1-202011 109 233

## Beschreibung

### TECHNISCHES GEBIET

Die vorliegende Erfindung betrifft eine Unterdeckbahn für ein geneigtes Dach mit einer wasser- und wasserdampfdurchlässigen Trägerschicht und einer wasserdichten und wasserdampfdurchlässigen Dichtschicht auf Basis von TPU sowie ein Dach mit einer Mehrzahl derartiger Unterdeckbahnen und ein Verfahren zum Herstellen einer solchen Unterdeckbahn.

### STAND DER TECHNIK

Unterdeckbahnen haben die Aufgabe, das ungedeckte Dach zunächst vor Regeneintrieb zu schützen. Nach der Hartbedachung soll der Eintrieb von Flugschnee, Spritz- und Tauwasser und von feinen Staubpartikeln in die Wärmedämmung verhindert werden. Gleichzeitig soll Wasserdampf, der als feuchter Überschuss aus der Baufeuchte und aus bewohnten Bereichen des Daches stammen kann, über die diffusionsfähige Wärmedämmung und die Unterdeckbahn an die Umgebung abgegeben werden. Dabei kann die gesamte, zwischen den Dachsparren angebrachte Wärmedämmung als temporärer Feuchtigkeitsspeicher dienen, wobei zu beachten ist, dass der Taupunkt, bei dem Kondenswasser niedergeschlagen wird, nicht unterschritten wird. Dies kann durch den Einbau einer unter der Bedachung liegenden Dampfsperre oder -bremse in die Dachkonstruktion verhindert werden.

Besitzt die verlegte Unterdeckbahn keine oder eine zu geringe Wasserdampfdurchlässigkeit, so kann ein im Dachbereich vorliegender Feuchtigkeitsüberschuss an der Unterdeckbahn kondensieren, die Wärmedämmung durchfeuchten und damit unter anderem ihre Funktion herabsetzen.

Bei Unterdeckbahnen wird unter anderem zwischen wasserdichten Unterdeckbahnen und regensicheren Unterdeckbahnen unterschieden. Regensichere Dachdeckungen sind zwar im Regelfall regensicher, können aber bei extremen Standorten oder besonderen Witterungsverhältnissen den Eintrieb von Treibregen und Flugschnee nicht gänzlich verhindern. Ein Unterdach gilt als regensicher, wenn seine Fläche einschließlich der Naht- und Stoßverbindungen zwischen einzelnen Unterdeckbahnen regensicher ausgeführt ist. Beim regensicheren Unterdach sind Durchdringungen, Einbauteile und Einfassungen regensicher auszuführen.

Im Gegensatz dazu müssen beim wasserdichten Unterdach Durchdringungen, Einbauteile und Einfassungen wasserdicht ausgeführt werden, so dass das gesamte Unterdach wasserundurchlässig ist. Nur so kann insgesamt von einer wasserdichten Dachkonstruktion gesprochen werden, weil die üblichen schuppenförmig verlegten Dachdeckungen im Regelfall nur regensicher sind und unter anderem den Eintrieb von Treibregen und Flugschnee nicht gänzlich verhindern können.

Um ein wasserdichtes Unterdach zu erzeugen werden herkömmlich unter anderem Kunststoffbahnen verwendet, wobei sich hierfür insbesondere TPU, also thermoplastische Elastomere auf Urethanbasis, eignen, weil sie besonders wasser- und wärmeresistent, weich und flexibel, dadurch gut zu verarbeiten und darüber hinaus insbesondere mikrobenbeständig sind. Um zwei nebeneinander liegende Unterdeckbahnen aus TPU miteinander zu verbinden werden diese miteinander verklebt, wobei dies das Vorhandensein eines Klebstoffs in oder an der TPU-Schicht erfordert.

Es gibt jedoch auch Unterdeckbahnen, die eine Dichtschicht auf Basis von TPO (thermoplastische Elastomere auf Olefinbasis) aufweisen. Solche Unterdeckbahnen sind auch thermisch miteinander verschweißbar.

Eine weitere Eigenschaft der Dichtschicht ist neben der Wasserdichtigkeit die Wasserdampfdurchlässigkeit, die auch als Diffusionsoffenheit bezeichnet wird. Das bedeutet, dass die Dichtschicht zwar gegenüber Wasser, das von außen auf die Unterdeckbahn auftreffen kann, dicht ist, Wasserdampf aus dem Inneren des Gebäudes aber wegen der Diffusionsoffenheit nach außen austreten lässt und somit eine Beeinträchtigung der Wärmedämmung oder anderer im Inneren des Gebäudes vorhandener Objekte durch zu hohe Feuchtigkeit vermeidet.

Die Unterdeckbahnen weisen häufig noch eine Trägerschicht auf, die wasser- und wasserdampfdurchlässig ist. Ein Schichtverbund aus einer Trägerschicht und einer Dichtschicht kann bei einer wasserdichten und wasserdampfdurchlässigen Dichtschicht insgesamt wasserdicht und wasserdampfdurchlässig sein, so dass sich dadurch eine diffusionsoffene und wasserdichte Ausführung eines Unterdachs realisieren lässt.

Aus der europäischen Patentanmeldung EP 2 256 266 A1 ist eine Unterdeckbahn für ein geneigtes Dach bekannt, bei der eine Dichtschicht auf ein herkömmliches Vliesmaterial aufgetragen wird. Hierfür werden üblicherweise unterschiedliche Stapelfaservliese verwendet. Es wurde gefunden, dass der Verschweißungsprozess benachbarter Unterdeckbahnen erheblich erschwert wird, wenn Trägerschichten aus Vlies zuvor mit Feuchtigkeit in Kontakt gekommen sind. Bei dem herkömmlich verwendeten Vliesmaterial besteht darüber hinaus die Gefahr, dass Feuchtigkeit, die an irgendeiner Stelle, zum Beispiel an einer Durchnagelung, mit der Trägerschicht in Verbindung gekommen ist, über das Vlies der Trägerschicht in die Dachkonstruktion gelangen und diese nachhaltig schädigen kann.

### DARSTELLUNG DER ERFINDUNG

Die Aufgabe der vorliegenden Erfindung liegt darin, eine dem obigen technischen Gebiet zugehörige Unterdeckbahn sowie ein Dach und ein Verfahren zum Herstellen einer Unterdeckbahn bereitzustellen, wodurch die Nachteile des Stands der Technik überwunden werden. Insbesondere besteht die Aufgabe darin, eine Unterdeckbahn für ein geneigtes Dach bereitzustellen, bei welcher der Verschweißungsprozess bei Kontakt der Trägerschicht mit Feuchtigkeit gegenüber dem Stand der Technik verbessert ist.

Diese Aufgabe wird durch eine Unterdeckbahn nach Anspruch 1 gelöst. Weitere bevorzugte Ausgestaltungen der Unterdeckbahn ergeben sich aus den Unteransprüchen.

Eine erfindungsgemäße Unterdeckbahn für ein geneigtes Dach mit einer wasser- und wasserdampfdurchlässigen Trägerschicht und einer wasserdichten und wasserdampfdurchlässigen Dichtschicht auf Basis von TPU ist dadurch gekennzeichnet, dass die Trägerschicht einen Faserstoff umfasst, der gegenüber Wasser im Wesentlichen keine Kapillaraszension aufweist. Unter einem "Faserstoff" werden erfindungsgemäß insbesondere ein Vliesstoff (auch: Vlies), ein Gewirke, ein Gitter, ein Gewebe, ein Gestrick sowie mögliche Kombinationen dieser Stoffe verstanden.

Erfindungsgemäß wird die Kapillarwirkung des Materials der Trägerschicht gegenüber Wasser so verändert, dass der Verschweißungsprozess auch durch Feuchtigkeit im Bereich der Trägerschicht nicht beeinträchtigt wird. Darüber hinaus kann durch die erfindungsgemäße Unterdeckbahn verhindert werden, dass Feuchtigkeit, beispielsweise durch Durchdringungen in der Dichtschicht, vom Vlies (als Beispiel eines Faserstoffs) aufgenommen wird, Feuchtigkeit auf diesem Weg an die unter dem Dach liegende Dachkonstruktion gelangt und diese dadurch beschädigt.

Die Eigenschaft des Faserstoffes, gegenüber Wasser im Wesentlichen keine Kapillaraszension aufzuweisen, wird durch das folgende Verfahren bestimmt. Ein 10 bis 30 mm breiter und 20 cm langer Teststreifen des auf seine Eignung zu testenden Faserstoffes wird hergestellt und in ein auf eine Höhe von 10 cm gefülltes Wasserbad von Raumtemperatur (20°C) so eingelegt, dass mindestens 5 cm des Streifens im Wasser liegen. Der Faserstoffstreifen wird dazu auf einer schiefen Ebene, beispielsweise einer Metallschiene, in einem Neigungswinkel von etwa 5 Grad zur Horizontalen in das Wasserbad eingelegt. Nach 24-stündiger Lagerung des Teststreifens im Wasserbad wird die kapillarbedingte Steighöhe entlang der Länge des Faserstoffstreifens gemessen. Die kapillarbedingte Steighöhe lässt sich leichter ablesen, wenn das Wasser im Wasserbad, beispielsweise durch Anfärbung, besser sichtbar gemacht wird.

Erfindungsgemäß gelten diejenigen Faserstoffe als gegenüber Wasser im Wesentlichen keine Kapillaraszension aufweisend, die bei dieser Untersuchung eine kapillarbedingte Steighöhe des Wassers in dem Faserstoff, vom Wasserspiegelstand ausgehend gemessen, von weniger als 5 cm zeigen.

Unter einem geneigten Dach wird ein Dach verstanden, das gemäß der DIN 1055 eine Neigung von mehr als 7 Grad aufweist. Trotz der Neigung des Dachs ist es für bestimmte Witterungsbedingungen vorteilhaft oder sogar nötig, nicht nur eine regensichere sondern eine wasserdichte Unterdeckbahn vorzusehen, um ein Eintreiben von Flugschnee, Treibregen, Vereisungen und Schneeablagerungen und dergleichen wirksam zu verhindern.

Als ein besonders bevorzugtes Material für eine solche Unterdeckbahn wird das wasserdichte und wasserdampfdurchlässige TPU verwendet, das die bereits oben genannten Vorteile aufweist. Durch eine bevorzugte Ausführung der Erfindung ist es möglich, nebeneinander liegende Unterdeckbahnen thermisch oder durch Quellschweißen miteinander zu verschweißen und somit wasserdicht und wasserdampfdurchlässig zusammenzufügen.

Zu TPU im Sinne der Erfindung sollen auch Stoffgemische mit einem Anteil von zumindest 80 Gew. -% TPU und bis zu 20 Gew.-% Füllstoff zählen. Entsprechende Füllstoffe können dabei beispielsweise zur Einsparung von Material und/oder Kostenreduktion verwendet werden.

Um zu beurteilen, ob eine Unterdeckbahn als wasserdicht bezeichnet werden kann, sind die DIN 1928 und die DIN 20811 heranzuziehen. Sind Prüfungen hiernach erfüllt, gelten die Bahnen als wasserdicht. Ebenso ist die Wasserdichtigkeit und damit der Einsatz der Erfindung maßgeblich definiert durch die Anforderungen des ZVDH (Zentralverband des Deutschen Dachdeckerhandwerkes), die das Bestehen eines definierten Schlagregentestes an der TU-Berlin vorsehen.

Die zur Diffusionsoffenheit zu beachtende Norm ist die DIN 4108, Teil 3. Dort wird Sd < 0,5 m als Grenzwert für Diffusionsoffenheit definiert. Als diffusionsoffen ist somit eine Schicht zu bezeichnen, deren Sd-Wert kleiner als 0,5 m ist.

Bevorzugt ist der Sd-Wert jedoch auch kleiner als 0,2 m. Nach DIN 68800 ist Sd < 0,2 m einzuhalten und eine entsprechende Schicht als diffusionsoffen anzusehen, wenn auf chemische Holzschutzmittel zu verzichten ist.

Besonders bevorzugt ist der Sd-Wert der Unterdeckbahn kleiner als 0,2 m und liegt insbesondere zwischen 0,02 m und 0,2 m. Bevorzugt umfasst die Trägerschicht einen 80 bis 200 g/m² schweren Faserstoff, insbesondere also ein Vlies oder ein Gewebe oder ein Gitter oder ein Gewirk oder Kombinationen der genannten Möglichkeiten. Diese Materialien haben sich als besonders gut geeignet für eine Trägerschicht einer Unterdeckbahn herausgestellt, da sie die nötige Festigkeit zum Tragen der Dichtschicht aufweisen, ohne dabei ein zu hohes Gewicht der Unterdeckbahn zu erzeugen. Ferner können sie als im Wesentlichen keine Kapillaraszension aufweisend ausgebildet werden.

Mit Vorteil umfasst die Trägerschicht einen Faserstoff, insbesondere einen Vliesstoff, der Polyesterfasern und einen Anteil von 0 Gewichtsprozent bis 50 Gewichtsprozent an Polypropylen (PP)-Fasern aufweist. Diese Fasern eignen sich besonders gut dazu, einen Faserstoff, insbesondere ein Vlies, zu bilden, das die erforderlichen Eigenschaften bezüglich der Kapillaraszension hat.

In einer bevorzugten Ausführungsform weist die Trägerschicht einen Faserstoff, insbesondere einen Vliesstoff, auf, der 25 Gew. -% bis 100 Gew.-% hydrophobe Fasern umfasst. Durch eine entsprechende Ausgestaltung der Trägerschicht mit hydrophoben Fasern wird besonders leicht erreicht, die gewünschten Eigenschaften gegenüber Wasser zu erzielen. Unter einer hydrophoben Faser wird dabei bevorzugt eine solche Faser verstanden, die durch einen auf die hydrophoben Eigenschaften der Faser gerichteten Ausrüstungsschritt bearbeitet wurde (sog. Hydrophobierung). Die Hydrophobierung kann grundsätzlich auf drei verschiedenen Wegen erfolgen, nämlich durch Anlagerung hydrophober Substanzen an die Fasern ("Imprägnierung"), durch chemische Reaktion hydrophober Substanzen mit der Faser, z.B. unter Verwendung einer Fluorcarbonsäure, und durch Bildung hydrophober Filme auf der Faser, bspw. mit Siliconen oder Fluorcarbonen als Polymeren.

Bevorzugt weist die Trägerschicht zumindest eine hydrophob ausgerüstete Seite auf. Dabei wird bei einer einseitigen Ausrüstung der Trägerschicht bevorzugt die der Dichtschicht gegenüberliegende Seite der Trägerschicht hydrophob ausgerüstet. Es kann jedoch auch die an einer Dichtschicht anliegende Seite der Trägerschicht ausgerüstet werden. Dies gilt insbesondere für Ausführungsformen der Unterdeckbahn, in denen die Trägerschicht beidseitig Dichtschichten aufweist.

Bei der Ausrüstung der Trägerschicht mit Fluorcarbonen wird der Faserstoff, beispielsweise der Vliesstoff, vorzugsweise mit Fluorcarbonen voll ausgerüstet, wobei bevorzugt das Foulardverfahren verwendet wird. Andererseits kann bei einseitiger Ausrüstung mit einer Fluorcarbonsäure bevorzugt das sogenannte Pflatschverfahren angewendet werden.

Neben der Ausrüstung mit Fluorcarbonen können auch Paraffine, beispielsweise eine Paraffinlösung, und Siliconverbindungen eingesetzt werden, um die Fasern zu hydrophobieren.

In einer bevorzugten Ausführungsform ist die Dicke der Dichtschicht derart bemessen, dass die Unterdeckbahn mit einer weiteren gleichartigen Unterdeckbahn durch thermisches Verschweißen und/oder durch Quellschweißen wasserdicht und wasserdampfdurchlässig zusammenfügbar ist, wobei die Unterdeckbahn einen wasserdichten und wasserdampfdurchlässigen Verbindungsstreifen entlang zumindest einer der Kanten der Trägerschicht aufweist, der über diese zumindest eine Kante hinausragt.

Beim thermischen Verschweißen wird die Temperatur der TPU-Schicht derart erhöht, dass sich diese mit einer anderen entsprechenden Schicht verbindet und somit homogen verschweißt wird. Beim Quellschweißen wird ein Quellschweißmittel, z. B. Tetrahydrofuran (THF), auf die Dichtschicht gegeben, welches das TPU anlöst und dadurch ein Verschweißen zwischen benachbarten Unterdeckbahnen ermöglicht. Daneben können beispielsweise auch Benzol oder Benzin verwendet werden. THF ist jedoch unter Anderem auf Grund seiner kurzen Einwirkzeit und damit verbunden kurzen zum Verlegen benötigten Zeit gegenüber Benzol oder Benzin oder anderen Lösungsmitteln besonders bevorzugt. Bevorzugte Lösungsmittel können allgemein unter die Alkane, Alkene, Aromaten, chlororganischen Verbindungen, Alkohole, Ester, Ether oder Ketone fallen.

Diese bevorzugte Unterdeckbahn besteht aus einer wasser- und wasserdampfdurchlässigen Trägerschicht und einer wasserdichten und wasserdampfdurchlässigen Dichtschicht und benötigt weder eine zusätzliche Klebeschicht als Verbindungsmittel mit einer weiteren Unterdeckbahn noch eine andere, die Stabilität der Unterdeckbahn erhöhende Schicht.

Bei herkömmlichen Unterdeckbahnen gemäß dem Oberbegriff des Anspruchs 1 sorgt die Trägerschicht für die Stabilität der Unterdeckbahn, wohingegen die Dichtschicht dafür verantwortlich ist, dass die Unterdeckbahn wasserdicht und wasserdampfdurchlässig ist. Das für die Dichtschicht verwendete Material auf Basis von TPU ist verhältnismäßig kostspielig, so dass herkömmlich darauf geachtet wird, die Dichtschicht im Rahmen der Vorgaben hinsichtlich ihrer Dichteigenschaft möglichst dünn auszuführen.

Gemäß diesen bevorzugten Ausführungsformen wird von diesem Grundsatz abgewichen und die Dicke der Dichtschicht gegenüber dem Stand der Technik erhöht. Die Dicke der Dichtschicht wird so weit erhöht, dass ein thermisches Verschweißen auch mit einer Dichtschicht auf Basis von TPU möglich ist, ohne dass die Dichtschicht oder die Trägerschicht beim thermischen Verschweißen beschädigt werden. Dies würde im Fall einer herkömmlichen Unterdeckbahn mit entsprechend dünner Dichtschicht geschehen, so dass herkömmliche Unterdeckbahnen durch thermisches Verschweißen nicht miteinander verbunden werden können. Das gleiche gilt auch für das Quellschweißen, das aus denselben Gründen auf eine Dichtschicht auf Basis von TPU mit einer zu geringen Dicke nicht anwendbar ist.

Um benachbarte Unterdeckbahnen möglichst effizient zusammenfügen zu können, ist der wasserdichte und wasserdampfdurchlässige Verbindungsstreifen entlang zumindest einer der Kanten der Trägerschicht vorgesehen, der über diese Kante hinausragt.

Dieser Verbindungsstreifen kann beispielsweise während der Produktion der Unterdeckbahn auf heißes TPU aufgelegt werden, das sich bereits auf der Trägerschicht befindet, und verbindet sich dadurch mit dem TPU der Dichtschicht. Es ist daneben beispielsweise auch möglich, dass der Verbindungsstreifen integral mit der Dichtschicht ausgeführt wird, dass also die Dichtschicht als solche entsprechend über zumindest eine der Kanten der Trägerschicht derart hinausragt, dass ein entsprechender Verbindungsstreifen gebildet wird. Daneben gibt es auch noch andere Möglichkeiten, den Verbindungsstreifen mit der Unterdeckbahn zu verbinden oder zu erzeugen, z.B. durch Herausziehen von Deckschichtmaterial oder Entfernen von Trägerschicht aus der Unterdeckbahn.

Weil der Verbindungsstreifen ebenfalls aus einem wasserdichten und wasserdampfdurchlässigen Material hergestellt ist, ist es möglich, eine Unterdeckbahn mit einer anderen Unterdeckbahn wasserdicht und wasserdampfdurchlässig zusammenzufügen, so dass ein Unterdach vollständig wasserdicht und wasserdampfdurchlässig ausgeführt werden kann. Der Verbindungsstreifen als Teil der Unterdeckbahn ermöglicht dabei ein besonders effizientes Verbinden zwischen benachbarten Unterdeckbahnen, weil hier kein zusätzlicher Kleber oder ein anderes Verbindungselement auf die benachbarten Unterdeckbahnen aufgelegt werden muss.

Die Merkmale "wasserdicht" und "wasserdampfdurchlässig" bzw. "diffusionsoffen" richten sich nach den bauaufsichtlichen Richtlinien, die für Dächer in Deutschland gelten. Entsprechende Normen finden sich beispielsweise in der DIN 68800 und der DIN 4108, Teil 3 und sollen auch in diesem Zusammenhang zur Definition der oben genannten Eigenschaften herangezogen werden.

Bevorzugt ist der Verbindungsstreifen ein Streifen auf TPU-Basis. Die bevorzugte Ausführungsform des Verbindungsstreifens auf TPU-Basis ermöglicht auch an den Schweißstellen eine wasserdichte und wasserdampfdurchlässige Abdeckung des Dachs mit allen Vorteilen des TPU und erleichtert das Verschweißen benachbarter Unterdeckbahnen.

In einer bevorzugten Ausführungsform ist das TPU der Dichtschicht oder das TPU des Verbindungsstreifens ein aromatisches TPU, wobei bevorzugt die Dichtschicht und der Verbindungsstreifen aus dem gleichen Material hergestellt sind. Es wird also besonders bevorzugt, dass sowohl das TPU der Dichtschicht als auch das TPU des Verbindungsstreifens ein aromatisches TPU ist. Aromatisches TPU eignet sich besonders gut zum Verschweißen und weist die bereits oben genannten, besonders bevorzugten Eigenschaften einer Dichtschicht auf TPU-Basis auf.

Mit Vorteil weist die Dichtschicht in dieser bevorzugten Ausführungsform eine Dicke von mindestens 0,06 mm, bevorzugt 0,06 bis 0,2 mm, besonders bevorzugt 0,06 bis 0,15 mm auf. Eine solche Dicke der Dichtschicht der Unterdeckbahn eignet sich dazu, benachbarte Unterdeckbahnen durch Verschweißen miteinander zu verbinden, ohne dass die Dichtschicht und/oder die Trägerschicht dabei beschädigt werden. Daneben ist die beanspruchte Dicke gleichzeitig dazu geeignet, eine effiziente Herstellung einer Unterdeckbahn vorzunehmen, da kein überschüssiges Material auf die Trägerschicht aufgetragen wird.

Mit Vorteil weist die Dichtschicht in dieser bevorzugten Ausführungsform eine Massen-Flächendichte von mindestens 60 g/m², bevorzugt 60 bis 200 g/m², besonders bevorzugt 60 bis 150 g/m² auf. Entsprechende Massen-Flächendichten bedeuten, dass gegenüber herkömmlichen Dichtschichten einer Unterdeckbahn des Oberbegriffs des Anspruchs 1 ein Massenauftrag stattgefunden hat, der benachbarte Unterdeckbahnen durch thermisches Verschweißen oder Quellschweißen miteinander verbindbar macht.

Bevorzugt ist die Unterdeckbahn klebstofffrei. Bei herkömmlichen Unterdeckbahnen mit einer Dichtschicht auf TPO-Basis sind irgendwie geartete Klebstoffe nötig, um die Unterdeckbahn mit einer benachbarten Unterdeckbahn zu verkleben. Auch wenn hierfür im Stand der Technik gelegentlich der Begriff "Verschweißen" verwendet wird, handelt es sich dabei tatsächlich um ein Verkleben, da nicht die TPO-Schichten der entsprechenden Dichtschichten aus sich heraus und direkt miteinander verbunden werden, sondern ein Klebstoff in die Unterdeckbahn eingearbeitet ist, der gegebenenfalls eine wasserdichte Verbindung zwischen benachbarten Unterdeckbahnen herstellt.

In einer besonders bevorzugten Ausführungsform ragt der Verbindungsstreifen um mindestens 3 cm, bevorzugt um zwischen 3 cm und 7 cm, besonders bevorzugt um zwischen 5 cm und 7 cm über die zumindest eine Kante hinaus. Ein Verbindungsstreifen, der um den oben genannten Wert über die Kante hinausragt, ermöglicht eine sichere Verbindung zwischen benachbarten Unterdeckbahnen, so dass die Gesamtheit der Unterdeckbahnen wasserdicht und diffusionsoffen ausgeführt werden kann. Er erfüllt damit die bauaufsichtlichen Anforderungen an eine wasserdichte Verschweißung von zwei Unterdeckbahnen miteinander.

Mit Vorteil ist in dieser Ausführungsform der Verbindungsstreifen integral mit der Dichtschicht ausgeführt. Ein solcher Verbindungsstreifen wird wie oben beschrieben beispielsweise während der Herstellung der Unterdeckbahn auf das heiße TPU aufgelegt oder als ein über die Trägerschicht überstehender Teil der Dichtschicht hergestellt.

Alternativ kann in dieser Ausführungsform vorgesehen sein, dass der Verbindungsstreifen mit der Dichtschicht durch thermisches Schweißen und/oder Quellschweißen zusammengefügt ist. In diesem Fall kann der Verbindungsstreifen nach dem Erkalten der Dichtschicht mit der Dichtschicht verbunden werden. Der Verbindungsstreifen kann also durch denselben Mechanismus mit der Dichtschicht verbunden werden, wie benachbarte Unterdeckbahnen miteinander verbunden werden können. Auf diese Weise lassen sich bestehende Unterdeckbahnen mit einer entsprechenden Dicke der Dichtschicht auch nachträglich mit einem erfindungsgemäßen Verbindungsstreifen ausstatten. Die Verlegung der Unterdeckbahn ist aber vereinfacht, da der Verbindungsstreifen nur mit einer Kante einer Unterdeckbahn verschweißt werden muss und nicht mit zwei aneinanderstoßenden Kanten zweier Unterdeckbahnen.

Grundsätzlich ist es auch in dieser bevorzugten Ausführungsform möglich, dass die Unterdeckbahn mehr als zwei Lagen aufweist, wobei bevorzugt wird, dass sie nur eine Trägerschicht und eine Dichtschicht enthält. Je nach Anwendungsgebiet kann es jedoch von Vorteil sein, entweder auf der Dichtschicht, zwischen der Dichtschicht und der Trägerschicht oder unter der Trägerschicht eine oder mehrere weitere Schichten vorzusehen. Um die Wasserdichtigkeit und Diffusionsoffenheit der Unterdeckbahn bei einer mehrschichtigen Ausführung sicherzustellen, ist jedoch darauf zu achten, dass die zusätzlich angebrachten Schichten jeweils zumindest wasserdampfdurchlässig sind und die Wasserdichtigkeit der Dichtschicht nicht beeinträchtigen. Diese bevorzugte Ausführungsform einer Unterdeckbahn kann auch mehrere Verbindungsstreifen aufweisen, die über mehrere Kanten der Trägerschicht hinausragen. Dies kann beispielsweise bei Eckstücken von Unterdeckbahnen oder bei speziellen Unterdeckelementen zur Abdichtung von Durchdringungen, Einbauteilen oder Einfassungen vorgesehen sein.

Ein Dach gemäß dieser bevorzugten Ausführungsform der Erfindung enthält eine Mehrzahl überlappend verlegter und verschweißter, wasserdichter und wasserdampfdurchlässiger Unterdeckbahnen, wie sie vorstehend beschrieben wurden. Dabei ist der Verbindungsstreifen einer Unterdeckbahn mit einer benachbarten Unterdeckbahn derart verschweißt, dass die Unterdeckbahnen eine wasserdichte und wasserdampfdurchlässige Schweißverbindung aufweisen. Bevorzugt ist der Verbindungsstreifen dabei integral mit der Dichtschicht der dazu gehörigen Unterdeckbahn ausgebildet, so dass ein Verschweißen nur an einer Seite des Verbindungsstreifens stattfinden muss. Ein solches Dach kann als wasserdicht nach den ZVDH-Richtlinien eingestuft werden und eignet sich daher, ein Gebäude auch in besonders ungünstigen Witterungsbedingungen wirksam vor Feuchtigkeit zu schützen.

Gemäß einer anderen bevorzugten Ausführungsform ist ein Verbindungsstreifen nicht unbedingt erforderlich. Es werden dort zumindest zwei Dichtschichten vorgesehen und die Trägerschicht ist zumindest bereichsweise beidseitig, bevorzugt beidseitig und vollflächig, mit einer Dichtschicht versehen.

Um benachbarte Unterdeckbahnen möglichst effizient zusammenfügen zu können, ist die Trägerschicht in dieser bevorzugten Ausführungsform beidseitig und vollflächig mit je einer Dichtschicht versehen. Durch die beidseitige und vollflächige Bedeckung der Trägerschicht sind einzelne Unterdeckbahnen an jeder Überlappungsstelle und direkt, d.h. ohne eine zusätzliche Klebeschicht oder einen Haftvermittler, verschweißbar. Auch können Anschlussbahnen als Manschettenlösung aus einer Unterdeckbahn geformt und mit der Basis-Unterdeckbahn direkt verschweißt werden.

Weil die Unterdeckbahn gemäß dieser bevorzugten Ausführungsform beidseitig mit einer wasserdichten und wasserdampfdurchlässigen Dichtschicht versehen ist, die mit einer Dichtschicht einer anderen Unterdeckbahn direkt verschweißbar ist, ist es möglich, eine Unterdeckbahn mit einer anderen Unterdeckbahn wasserdicht und wasserdampfdurchlässig zusammenzufügen, so dass ein Unterdach vollständig wasserdicht und wasserdampfdurchlässig ausgeführt werden kann, ohne einen Verbindungsstreifen im Sinne der zuvor geschilderten bevorzugten Ausführungsform zu benötigen. Die beidseitige vollflächige Dichtschicht der Unterdeckbahn ermöglicht dabei ein besonders effizientes Verbinden zwischen benachbarten Unterdeckbahnen, weil hier kein zusätzlicher Kleber oder ein anderes Verbindungselement auf die benachbarten Unterdeckbahnen aufgelegt werden muss.

Mit Vorteil weisen die Dichtschichten in dieser bevorzugten Ausführungsform jeweils und unabhängig voneinander eine Dicke von mindestens 0,06 mm, bevorzugt 0,06 mm bis 0,2 mm, besonders bevorzugt 0,06 mm bis 0,15 mm, auf. Eine solche Dicke einer Dichtschicht der Unterdeckbahn eignet sich dazu, benachbarte Unterdeckbahnen durch Schweißen miteinander zu verbinden, ohne dass die Dichtschichten und/oder die Trägerschicht dabei beschädigt werden. Daneben ist die beanspruchte Dicke gleichzeitig dazu geeignet, eine effiziente Herstellung einer Unterdeckbahn vorzunehmen, da kein überschüssiges Material auf die Trägerschicht aufgetragen wird.

Mit Vorteil weisen die Dichtschichten in dieser bevorzugten Ausführungsform jeweils und unabhängig voneinander eine mittlere Massen-Flächendichte von mindestens 60 g/m², bevorzugt 60 g/m² bis 200 g/m², besonders bevorzugt 60 g/m² bis 150 g/m², auf. Entsprechende Massen-Flächendichten bedeuten, dass gegenüber herkömmlichen Dichtschichten einer Unterdeckbahn des Oberbegriffs des Anspruchs 1 ein Massenauftrag stattgefunden hat, der benachbarte Unterdeckbahnen durch thermisches Verschweißen oder Quellschweißen miteinander verbindbar macht. Die mittlere Massen-Flächendichte einer Unterdeckbahn wird dabei durch Mittelung über die gesamte Fläche der Unterdeckbahn bestimmt.

Vorteilhaft ist bei dieser Ausführungsform der Unterdeckbahn zumindest eine Dichtschicht, bevorzugt beide Dichtschichten, an einer Stelle eines ersten Abstands von einem Rand der Unterdeckbahn dicker als an einer Stelle eines größeren zweiten Abstands von dem Rand der Unterdeckbahn. Die Dichtschicht und somit die Gesamtheit der Unterdeckbahn wird also zur Mitte hin dünner. Das Dünnerwerden bezieht sich dabei bevorzugt auf eine Richtung senkrecht zur Hauptausdehnungsrichtung der Unterdeckbahn. Die Hauptausdehnungsrichtung einer im Wesentlichen rechteckigen Unterdeckbahn ist dabei die Richtung des Kantenpaars mit einer größeren Länge als derjenigen der senkrecht dazu Verlaufenden. Diese Ausführungsform der Unterdeckbahn wird als konkav bezeichnet.

Bei einer als beidseitig konkav bezeichneten Form dieser Ausführungsform der Unterdeckbahn werden beide Dichtschichten entsprechend angepasst. Die Anpassung der Dicke führt zu dem Vorteil, dass der Sd-Wert der Unterdeckbahn durch die Variierung der Schichtdicke der Dichtschichten eingestellt werden kann. Damit kann das Maß der Diffusionsoffenheit und Wasserdichtigkeit für eine beidseitige Beschichtung der Trägerschicht mit je einer Dichtschicht bedarfsgerecht eingestellt werden. Die Dicke der jeweiligen Dichtschicht im Bereich der Ränder ist bevorzugt größer, um das Verschweißen zwischen benachbarten Unterdeckbahnen zu erleichtern. Daneben kann die jeweilige Dichtschicht auch nur auf einer Seite der Trägerschicht in ihrer Dicke variiert werden. Die Dichtschicht auf der dieser gegenüberliegenden Seite der Trägerschicht kann dabei mit gleichbleibender Dicke ausgeführt werden. Eine solche Form dieser Ausführungsform wird als einseitig konkav bezeichnet.

Alternativ ist bei dieser bevorzugten Ausführungsform vorteilhaft, dass zumindest eine Dichtschicht, bevorzugt beide Dichtschichten, an einer Stelle eines ersten Abstands von einem Rand der Unterdeckbahn dünner als an einer Stelle eines größeren zweiten Abstands von dem Rand der Unterdeckbahn ist. Die Dichtschicht und somit die Gesamtheit der Unterdeckbahn wird also zur Mitte hin dicker. Das Dickerwerden bezieht sich dabei bevorzugt auf eine Richtung senkrecht zur Hauptausdehnungsrichtung der Unterdeckbahn. Die Hauptausdehnungsrichtung einer im Wesentlichen rechteckigen Unterdeckbahn ist dabei die Richtung des Kantenpaars mit einer größeren Länge als derjenigen der senkrecht dazu Verlaufenden. Diese Form dieser Ausführungsform der Unterdeckbahn wird als konvex bezeichnet.

Bei einer als beidseitig konvex bezeichneten Form dieser Ausführungsform der Unterdeckbahn werden beide Dichtschichten entsprechend angepasst. Auch diese Anpassung der Dicke führt zu dem Vorteil, dass der Sd-Wert der Unterdeckbahn durch die Variierung der Schichtdicke der Dichtschichten eingestellt werden kann. Damit kann die Diffusionsoffenheit und Wasserdichtigkeit auch für eine beidseitige Beschichtung der Trägerschicht mit je einer Dichtschicht sichergestellt werden.

Daneben kann die Dichtschicht auf einer Seite der Trägerschicht in ihrer Dicke variiert werden. Die andere Dichtschicht auf der gegenüberliegenden Seite der Trägerschicht kann dabei mit gleichbleibender Dicke ausgeführt werden. Eine solche Form wird als einseitig konvex bezeichnet. Grundsätzlich ist es auch möglich, dass die Dichtschicht auf einer Seite konkav und auf der dieser gegenüberliegenden Seite konvex ausgebildet ist.

Mit Vorteil hat die Unterdeckbahn dieser Ausführungsform einen ersten Rand und einen gegenüberliegenden zweiten Rand, wobei zumindest eine Dichtschicht, bevorzugt beide Dichtschichten, für je ein vorgebbares Abstandsintervall von dem ersten und zweiten Rand an jeder Stelle eines ersten kürzesten Abstands zu einem der beiden Ränder dicker als an jeder Stelle eines zweiten kürzesten Abstands zu einem der beiden Ränder ist, wobei der zweite Abstand größer als der erste Abstand ist.

Mit anderen Worten gilt bevorzugt für eine Unterdeckbahn mit zwei gegenüberliegenden Rändern, dass die Dicke zumindest einer, bevorzugt beider Dichtschichten, innerhalb eines Flächenbereichs kontinuierlich aus der Richtung des ersten Rands bis zum Mittelbereich zwischen den beiden Rändern abnimmt und anschließend aus der Richtung der Mitte und hin zum gegenüberliegenden zweiten Rand, innerhalb eines oder bevorzugt desselben Flächenbereichs, kontinuierlich ansteigt. Besonders bevorzugt kann der kontinuierliche Übergang zwischen verschiedenen Dicken dabei in einer parabolischen, hyperbolischen oder anders gebogenen Form vorgenommen werden.

Alternativ hat die Unterdeckbahn dieser bevorzugten Ausführungsform einen ersten Rand und einen gegenüberliegenden zweiten Rand, wobei zumindest eine Dichtschicht, bevorzugt beide Dichtschichten, für je ein vorgebbares Abstandsintervall von dem ersten und zweiten Rand an jeder Stelle eines ersten kürzesten Abstands zu einem der beiden Ränder dünner als an jeder Stelle eines zweiten kürzesten Abstands zu einem der beiden Ränder ist, wobei der zweite Abstand größer als der erste Abstand ist.

Mit anderen Worten gilt bevorzugt für eine Unterdeckbahn mit zwei gegenüberliegenden Rändern, dass die Dicke zumindest einer, bevorzugt beider Dichtschichten, innerhalb eines Flächenbereichs kontinuierlich aus der Richtung des ersten Rands bis zu einem Mittelbereich zwischen den beiden Rändern zunimmt und anschließend aus der Richtung der Mitte und hin zum gegenüberliegenden zweiten Rand, innerhalb eines oder bevorzugt desselben Flächenbereichs, kontinuierlich abnimmt. Besonders bevorzugt kann der kontinuierliche Übergang zwischen verschiedenen Dicken dabei in einer parabolischen, hyperbolischen oder anders gebogenen Form vorgenommen werden.

Zur Mitte hin können die Dichtschichten die vorstehend als bevorzugt beschriebenen Dicken auch unterschreiten. Die Dicke der Dichtschichten ist als Dicke in einem Randbereich der Unterdeckbahn zu verstehen, der außerhalb eines Abstandsintervalls im obigen Sinne liegt. Es ist dabei vorteilhaft, dass die Dickenvariation nur in einer im Wesentlichen senkrecht zur Längsseite der Unterdeckbahn verlaufenden Richtung vorgesehen ist. Daneben kann die Dickenvariation aber auch entlang jeder Richtung in der Ebene einer Unterdeckbahn vorgesehen sein.

Grundsätzlich ist die erfindungsgemäße Unterdeckbahn für alle Anwendungen, die wasserdichte und wasserdampfdurchlässige Unterspannungen benötigen, einsetzbar. Insbesondere kann bei dem Vorsehen einer wasserdichten und diffusionsoffenen Unterdeckbahn auf Holzschutzmittel zum Schutz der Dachkonstruktion verzichtet werden. Die erfindungsgemäße Unterdeckbahn ermöglicht eine besonders effiziente Verlegung eines Unterdachs sowie eine effiziente Herstellung der Unterdeckbahnen. Durch die beidseitige Bedeckung der Trägerschicht mit einer Dichtschicht können benachbarte Unterdeckbahnen direkt miteinander verbunden werden, wobei diese auch an der Verbindungsstelle, nämlich der Überlappung zwischen den benachbarten Unterdeckbahnen, wasserdicht und diffusionsoffen sind.

Ein Dach gemäß dieser bevorzugten Ausführungsform enthält eine Mehrzahl überlappend verlegter und verschweißter, wasserdichter und wasserdampfdurchlässiger Unterdeckbahnen, wie sie vorstehend beschrieben wurden. Dabei ist die Dichtschicht einer ersten Seite einer Unterdeckbahn mit einer Dichtschicht einer dieser gegenüberliegenden zweiten Seite einer benachbarten Unterdeckbahn derart verschweißt, dass die Unterdeckbahnen eine wasserdichte und wasserdampfdurchlässige Schweißverbindung aufweisen. Ein solches Dach kann als wasserdicht nach den ZVDH Richtlinien eingestuft werden und eignet sich daher, ein Gebäude auch in besonders ungünstigen Witterungsbedingungen wirksam vor Feuchtigkeit zu schützen.

Ferner wird ein Dach bevorzugt, bei dem die Unterdeckbahn mit der benachbarten Unterdeckbahn im Wesentlichen über ihre gesamte überlappende Fläche verschweißt ist. Dies trägt weiter zur Stabilität und Dichtheit des Dachs bei.

Alternativ hierzu kann auch in dieser Ausführungsform, insbesondere im Fall des Quellverschweißens zweier Unterdeckbahnen, ein Streifen vorgesehen sein, über den die Unterdeckbahnen miteinander verschweißt sind. Hierzu könnte ein Quellschweißmittel entlang eines Streifens auf eine Unterdeckbahn aufgetragen werden. Ein solcher Streifen kann insbesondere auch schmaler als die überlappende Fläche zwischen den benachbarten Unterdeckbahnen sein. Er sollte jedoch eine durchgehende Dichtigkeit sicherstellen und somit keine zwischen den benachbarten Unterdeckbahnen durchgehenden Lücken aufweisen.

Weitere bevorzugte Ausführungsformen ergeben sich aus der Gesamtheit der Ansprüche sowie der nachfolgenden Figurenbeschreibung.

### KURZE FIGURENBESCHREIBUNG

- Fig. 1A: zeigt eine Seitenansicht im Querschnitt einer bevorzugten Unterdeckbahn für ein geneigtes Dach;
- Fig. 1B: zeigt eine Seitenansicht im Querschnitt einer anderen bevorzugten Unterdeckbahn für ein geneigtes Dach;
- Fig. 1C: zeigt eine Seitenansicht im Querschnitt einer weiteren bevorzugten Unterdeckbahn für ein geneigtes Dach;
- Fig. 2: zeigt eine Draufsicht auf zwei zusammengefügte Unterdeckbahnen; und
- Fig. 3: zeigt eine Draufsicht eines Eckstücks einer bevorzugten Unterdeckbahn.
- Fig. 4A: zeigt eine Seitenansicht im Querschnitt einer weiteren bevorzugten Unterdeckbahn für ein geneigtes Dach;
- Fig. 4B: zeigt eine Seitenansicht im Querschnitt einer anders geformten Unterdeckbahn für ein geneigtes Dach;
- Fig. 4C: zeigt eine Seitenansicht im Querschnitt einer noch anders geformten Unterdeckbahn für ein geneigtes Dach; und
- Fig. 5: zeigt eine Draufsicht auf zwei zusammengefügte Unterdeckbahnen.

### WEGE ZUR AUSFÜHRUNG DER ERFINDUNG

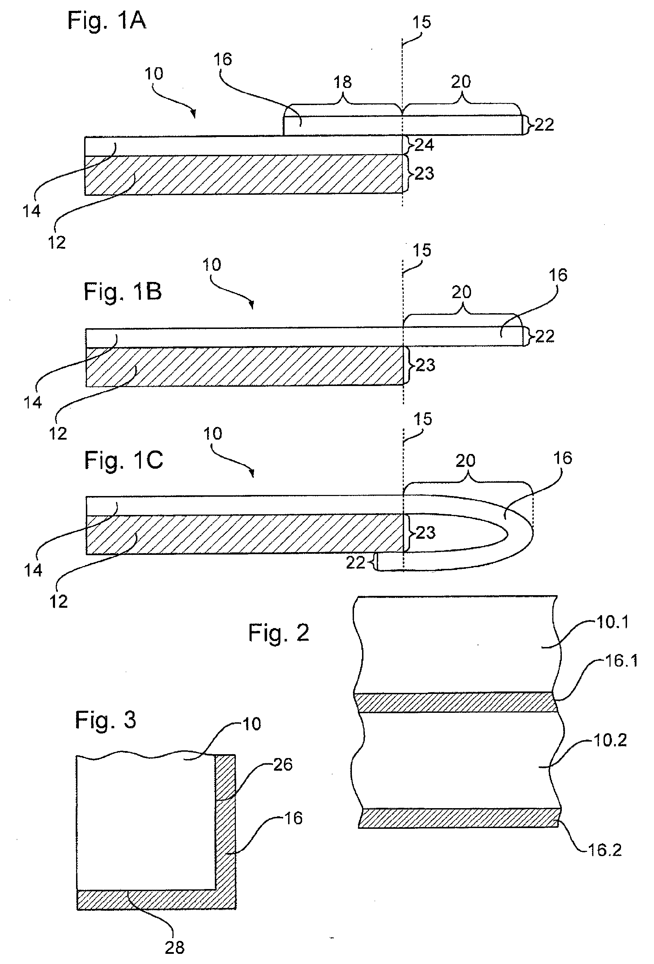

Fig. 1A zeigt eine Seitenansicht einer bevorzugten Unterdeckbahn 10 in einer Querschnittsdarstellung. Auf einer Trägerschicht 12 ist eine Dichtschicht 14 angeordnet, die auf TPU-Basis ausgeführt ist. Auf der Dichtschicht 14 befindet sich entlang einer Kante 15 ein Verbindungsstreifen 16, der sich zu beiden Seiten der Kante 15 erstreckt.

Der Verbindungsstreifen 16 erstreckt sich dabei um den Abstand 18 über die Dichtschicht 14 der Unterdeckbahn 10 und ragt um den Abstand 20 über die Kante 15 der Trägerschicht 12 hinaus. Die Dicke 24 der Dichtschicht 14 ist in Fig. 1A als etwas geringer als die Dicke 23 der Trägerschicht 12 dargestellt. Dagegen entspricht die Dicke 22 des Verbindungsstreifens 16 der Dicke 24 der Dichtschicht 14.

Der Verbindungsstreifen 16 und die Dichtschicht 14 sind nicht nur gleich dick, sondern auch aus dem gleichen Material, nämlich bevorzugt aromatischem TPU, hergestellt. Die Trägerschicht 12 ist aus einem Vlies gefertigt.

Der Abstand 18 bzw. 20 des Verbindungsstreifens 16 beträgt in der in Fig. 1A dargestellten Ausführungsform jeweils 5 cm, die Dicke 22 des Verbindungsstreifens 16 beträgt, ebenso wie die Dicke 24 der Dichtschicht 14, 0,09 mm. Die Dichtschicht 14 weist dabei eine Massen-Flächendichte von 90 g/m² auf.

Fig. 1B zeigt eine Seitenansicht einer bevorzugten Unterdeckbahn 10 in einer Querschnittsdarstellung, die der aus Fig. 1A ähnelt. In Fig. 1B ist jedoch eine andere bevorzugte Ausführungsform dargestellt, bei welcher der Verbindungsstreifen 16 integral mit der Dichtschicht 14 ausgeführt ist. Die Dicke 22 des Verbindungsstreifens 16 ist in dieser Ausführungsform gleich der Dicke der Dichtschicht 14. Der Verbindungsstreifen 16 erstreckt sich, wie in der in Fig. 1A dargestellten Ausführungsform, ebenfalls um den Vorsprung 20 über die Kante 15 der Trägerschicht 12. Im Übrigen wird auf die Beschreibung der Fig. 1A verwiesen.

Fig. 1C zeigt eine weitere Ausführungsform einer bevorzugten Unterdeckbahn 10 in einer Querschnittsdarstellung, die den Fig. 1A und 1B ähnelt. In Fig. 1C ist dabei jedoch der Verbindungsstreifen 16, der wie bei der Ausführungsform aus Fig. 1B integral mit der Dichtschicht 14 ausgeführt ist, umgeklappt und an der Trägerschicht 12 auf der der Dichtschicht 14 gegenüber liegenden Seite angebracht. Im Übrigen entspricht diese Ausführungsform der in Fig. 1B dargestellten.

Fig. 2 zeigt eine Draufsicht auf zwei nebeneinander liegende Unterdeckbahnen 10.1, 10.2, die durch einen Verbindungsstreifen 16.1 der ersten Unterdeckbahn 10.1 miteinander verbunden sind. Auf der dem Verbindungsstreifen 16.1 der ersten Unterdeckbahn 10.1 gegenüberliegenden Seite der zweiten Unterdeckbahn 10.2 befindet sich der Verbindungsstreifen 16.2 der zweiten Unterdeckbahn 10.2. Somit könnte eine weitere Unterdeckbahn entlang der Kante der zweiten Unterdeckbahn 10.2, die mit dem Verbindungsstreifen 16.2 versehen ist, an die zweite Unterdeckbahn 10.2 angelegt und mit dieser zusammengefügt werden.

Die Unterdeckbahnen 10.1, 10.2 erstrecken sich dabei parallel zu der Kante, entlang der die Verbindungsstreifen 16.1 und 16.2 verlaufen. Durch das wasserdichte und diffusionsoffene Verbinden der beiden Unterdeckbahnen 10.1 und 10.2 ist auch die Gesamtheit der Unterdeckbahnen 10.1 und 10.2 als wasserdicht und diffusionsoffen einzustufen.

Fig. 3 zeigt eine bevorzugte Ausführungsform einer Unterdeckbahn 10, bei der ein Verbindungsstreifen 16 entlang zweiter Kanten 26 und 28 der Unterdeckbahn 10 verläuft. Die beiden Kanten 26 und 28 der Unterdeckbahn 10 verlaufen dabei in der in Fig. 3 dargestellten Ausführungsform im rechten Winkel zueinander.

Somit lässt sich durch die in Fig. 3 gezeigte Ausführungsform der Unterdeckbahn 10 einerseits eine wasserdichte und diffusionsoffene Verbindung zwischen längsseitig benachbarten Unterdeckbahnen entlang der Kante 26 zusammenfügen, andererseits ist es auch möglich, hintereinander liegende Unterdeckbahnen 10 entlang der Kante 28 durch den Verbindungsstreifen 16 wasserdicht und wasserdampfdurchlässig zu verbinden.

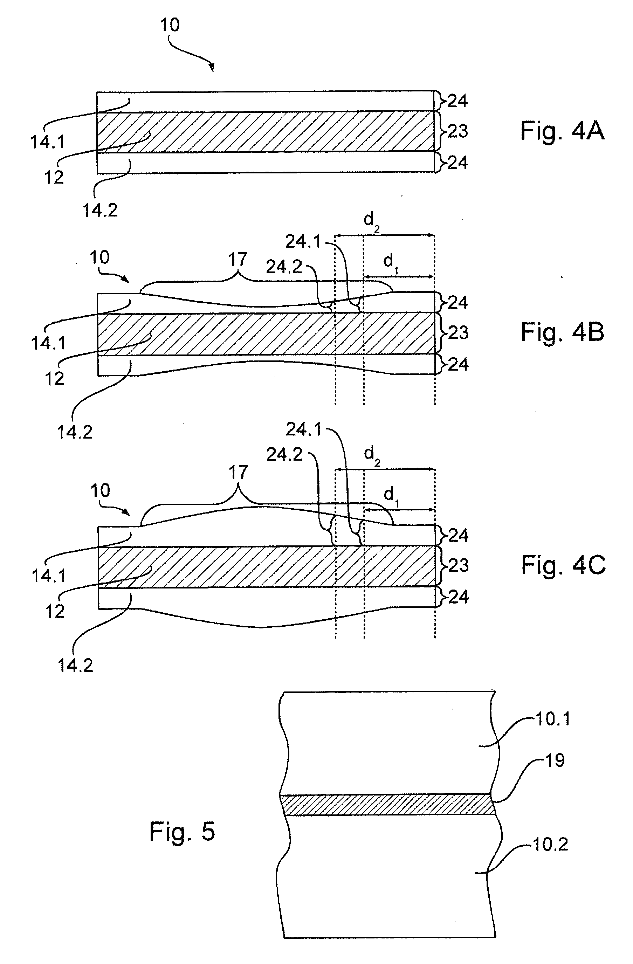

Fig. 4A zeigt eine Seitenansicht einer bevorzugten Unterdeckbahn 10 in einer Querschnittsdarstellung. Auf der Oberseite, nämlich der ersten Seite einer Trägerschicht 12 ist eine erste Dichtschicht 14.1 angeordnet, die auf TPU-Basis ausgeführt ist. Auch auf der Unterseite, nämlich der zweiten Seite der Trägerschicht 12, befindet sich eine Dichtschicht 14.2 auf TPU-Basis.

Die Dicke 24 der Dichtschichten 14.1 und 14.2 ist in Fig. 4A als etwas geringer als die Dicke 23 der Trägerschicht 12 dargestellt. Die Dicke 24 der Dichtschichten 14.1 und 14.2 beträgt 0,09 mm und die Dichtschichten 14.1, 14.2 weisen dabei eine mittlere Massen-Flächendichte von 90 g/m² auf. Hier ist dargestellt, dass die Dicke 24 der Dichtschichten 14.1 und 14.2 gleich ist. Es ist jedoch auch möglich, dass die Dichtschicht 14.1 eine andere Dicke aufweist als die Dichtschicht 14.2.

Ferner sind die Dichtschichten 14.1 und 14.2 nicht nur gleich dick, sondern auch aus dem gleichen Material, nämlich in diesem Beispiel einem aromatischen TPU, hergestellt. Die Trägerschicht 12 ist aus einem Vlies gefertigt.

Fig. 4B zeigt eine Seitenansicht einer Unterdeckbahn 10 in einer Querschnittsdarstellung, die der aus Fig. 4A entspricht. In Fig. 4B ist jedoch eine andere Ausführungsform dargestellt, bei welcher die Dicke der Dichtschichten 14.1 und 14.2 in einem Abstandsintervall 17 variiert.

In der in dieser Figur gezeigten beidseitig konkaven Ausführungsform erstreckt sich das Abstandsintervall 17 über einen mittleren Bereich der Unterdeckbahn 10, der von den eigentlichen Rändern der Unterdeckbahn beabstandet ist. Die Dicke der Dichtschichten außerhalb des Abstandsintervalls 17 gleicht dabei der Dicke 24 der Dichtschichten 14.1 und 14.2 in der in Fig. 4A gezeigten Ausführungsform.

Die beidseitig konkave Ausführungsform der Unterdeckbahn 10 lässt sich beispielsweise dadurch beschreiben, dass für jede der Dichtschichten 14.1 und 14.2 und für eine Stelle eines ersten kürzesten Abstands d₁ von einem ersten Rand der Unterdeckbahn 10 eine erste Dicke 24.1 gemessen werden kann. Für eine zweite Stelle eines zweiten kürzesten Abstands d₂ von dem ersten Rand, der größer als der erste kürzeste Abstand d₁ von dem ersten Rand ist, ist die Dicke 24.2 der Dichtschichten 14.1 und 14.2 dann kleiner als für die erste Stelle.

In der in Fig. 4B gezeigten Ausführungsform gilt dies für jede Stelle innerhalb des Abstandsintervalls 17. Der kürzeste Abstand kann sich dabei zum rechten Rand der Unterdeckbahn 10 in dieser Figur und zum linken Rand der Unterdeckbahn 10 in dieser Figur erstrecken, je nachdem, in welcher Richtung er kürzer ist. Auf diese Weise wird klar, dass die Dicke der Dichtschichten 14.1, 14.2 von den Rändern des Abstandsintervalls 17 zur Mitte hin kontinuierlich abnimmt. In dieser Ausführungsform beschreibt die Dickenvariation der Dichtschichten 14.1, 14.2 im Abstandsintervall 17 einen parabolischen Verlauf. Im Übrigen wird auf die Beschreibung der Fig. 4A verwiesen.

Fig. 4C zeigt eine weitere Ausführungsform einer Unterdeckbahn 10 in einer Querschnittsdarstellung, die denen in Fig. 4A und 4B entspricht. In der Ausführungsform aus Fig. 4C variiert jedoch die Dicke der Dichtschichten 14.1 und 14.2 innerhalb eines Abstandsintervalls 17 auf beidseitig konvexe Weise.

Analog zur obigen Beschreibung der Fig. 4B lässt sich die beidseitig konvexe Ausführungsform der Unterdeckbahn 10 beispielsweise dadurch beschreiben, dass für jede der Dichtschichten 14.1 und 14.2 und für eine Stelle eines ersten kürzesten Abstands d₁ von einem ersten Rand der Unterdeckbahn 10 eine erste Dicke 24.1 gemessen werden kann. Für eine zweite Stelle eines zweiten kürzesten Abstands d₂ von dem ersten Rand, der größer als der erste kürzeste Abstand d₁ von dem ersten Rand ist, ist die Dicke 24.2 der Dichtschichten 14.1 und 14.2 größer als für die erste Stelle.

In der in Fig. 4B gezeigten Ausführungsform gilt dies ebenfalls für jede Stelle innerhalb des Abstandsintervalls 17. Der kürzeste Abstand kann sich dabei zum rechten Rand der Unterdeckbahn 10 in dieser Figur und zum linken Rand der Unterdeckbahn 10 in dieser Figur erstrecken. Auf diese Weise wird klar, dass die Dicke der Dichtschichten 14.1, 14.2 von den Rändern des Abstandsintervalls 17 zur Mitte hin kontinuierlich zunimmt. In dieser Ausführungsform beschreibt die Dickenvariation der Dichtschichten 14.1, 14.2 im Abstandsintervall 17 einen parabolischen Verlauf. Im Übrigen entspricht diese Ausführungsform der in Fig. 4B dargestellten.

Fig. 5 zeigt eine Draufsicht auf zwei nebeneinander liegende Unterdeckbahnen 10,1, 10.2, die über einen Überlappungsbereich 19 zwischen den Unterdeckbahnen 10.1, 10.2 miteinander verbunden sind.

Die Unterdeckbahnen 10,1, 10.2 erstrecken sich dabei parallel zu der Kante, entlang der die Unterdeckbahnen 10.1, 10.2 überlappen. Durch das wasserdichte und diffusionsoffene Verbinden der beiden Unterdeckbahnen 10.1 und 10.2 ist auch die Gesamtheit der Unterdeckbahnen 10.1 und 10.2 als wasserdicht und diffusionsoffen einzustufen.

Mehrere Unterdeckbahnen können auch entlang ihrer stirnseitigen Enden überlappend angeordnet und miteinander verschweißt werden. Eine Dickenvariation der Dichtschichten der Unterdeckbahnen ist für diesen Fall derart zu bevorzugen, dass sich am stirnseitigen Ende der Unterdeckbahnen ein Randbereich der Dichtschichten befindet, der eine zum Verschweißen ausreichende Dicke aufweist.

Somit lässt sich einerseits eine wasserdichte und diffusionsoffene Verbindung zwischen längsseitig benachbarten Unterdeckbahnen und andererseits auch zwischen hintereinander liegenden Unterdeckbahnen entlang der Stirnseiten herstellen.

Die in den Figuren gezeigten Ausführungsformen lassen sich geometrisch auf nahezu beliebige Weise variieren, so dass insbesondere auch gekrümmte oder mit Winkeln versehene Unterdeckbahnen ausgeführt werden können.

## Patentansprüche

1. Unterdeckbahn (10) für ein geneigtes Dach
mit einer wasser- und wasserdampfdurchlässigen Trägerschicht (12) und
einer wasserdichten und wasserdampfdurchlässigen Dichtschicht (14, 14.1, 14.2) auf Basis von TPU,
**dadurch gekennzeichnet, dass**
die Trägerschicht (12) einen Faserstoff umfasst, der gegenüber Wasser im Wesentlichen keine Kapillaraszension aufweist,
wobei die Eigenschaft des Faserstoffes, gegenüber Wasser im Wesentlichen keine Kapillaraszension aufzuweisen, durch ein Verfahren bestimmt wird, bei dem
ein 10 bis 30 mm breiter und 20 cm langer Teststreifen des auf seine Eignung zu testenden Faserstoffes hergestellt und in ein auf eine Höhe von 10 cm gefülltes Wasserbad von 20°C so eingelegt wird, dass mindestens 5 cm des Streifens im Wasser liegen,
der Faserstoffstreifen dazu auf einer schiefen Ebene in einem Neigungswinkel von etwa 5 Grad zur Horizontalen in das Wasserbad eingelegt wird und
nach 24-stündiger Lagerung des Teststreifens im Wasserbad die kapillarbedingte Steighöhe entlang der Länge des Faserstoffstreifens gemessen wird,
wobei der Faserstoff als gegenüber Wasser im Wesentlichen keine Kapillaraszension aufweisend definiert ist, wenn sich bei dieser Untersuchung eine kapillarbedingte Steighöhe des Wassers in dem Faserstoff, vom Wasserspiegelstand ausgehend gemessen, von weniger als 5 cm ergibt.

2. Unterdeckbahn (10) nach Anspruch 1, wobei
die Trägerschicht (12) einen 80-200 g/m² schweren Faserstoff umfasst.

3. Unterdeckbahn (10) nach einem der vorhergehenden Ansprüche, wobei der Faserstoff ein Vlies, ein Gitter, ein Gewebe, ein Gewirke, ein Gestrick oder eine Kombination aus diesen Stoffen ist, vorzugsweise ein Vlies.

4. Unterdeckbahn (10) nach einem der vorhergehenden Ansprüche, wobei
die Trägerschicht (12) einen Faserstoff umfasst, der Polyesterfasern und einen Anteil von 0 Gew.-% bis 50 Gew. -% an PP-Fasern aufweist.

5. Unterdeckbahn (10) nach einem der vorhergehenden Ansprüche, wobei
die Trägerschicht (12) einen Faserstoff umfasst, der 25 Gew. -% bis 100 Gew.-% hydrophobe Fasern aufweist.

6. Unterdeckbahn (10) nach einem der vorhergehenden Ansprüche, wobei
die Trägerschicht (12) zumindest eine hydrophob, insbesondere mit Fluorcarbonen, Siliconen oder Paraffinen oder chemisch, insbesondere mit einer Fluorcarbonsäure, ausgerüstete Seite aufweist.

7. Unterdeckbahn (10) nach einem der vorhergehenden Ansprüche,
wobei die Unterdeckbahn (10) klebstofffrei ist.

8. Unterdeckbahn nach einem der Ansprüche 1 bis 7,
wobei die Dicke der Dichtschicht (14) derart bemessen ist, dass die Unterdeckbahn (10) mit einer weiteren gleichartigen Unterdeckbahn (10) durch thermisches Verschweißen und/oder durch Quellschweißen wasserdicht und wasserdampfdurchlässig zusammenfügbar ist,
wobei die Unterdeckbahn (10) einen wasserdichten und wasserdampfdurchlässigen Verbindungsstreifen (16) entlang zumindest einer der Kanten der Trägerschicht (12) aufweist, der über diese zumindest eine Kante hinausragt.

9. Unterdeckbahn (10) nach Anspruch 8,
wobei der Verbindungsstreifen (16) ein Streifen auf TPU-Basis ist.

10. Unterdeckbahn (10) nach einem der Ansprüche 1 bis 7, die zwei wasserdichte und wasserdampfundurchlässige Dichtschichten (14.1, 14.2) aufweist,
wobei die Dicke der Dichtschichten (14.1, 14.2) derart bemessen ist, dass die Unterdeckbahn (10) mit einer weiteren gleichartigen Unterdeckbahn (10) durch thermisches Verschweißen und/oder durch Quellschweißen wasserdicht und wasserdampfdurchlässig zusammenfügbar ist,
wobei die Trägerschicht zumindest bereichsweise beidseitig, bevorzugt beidseitig und vollflächig, mit einer Dichtschicht (14.1, 14.2) versehen ist.

11. Unterdeckbahn (10) nach einem der vorhergehenden Ansprüche,
wobei die Dichtschicht (14) oder die Dichtschichten (14.1, 14.2) eine Dicke von mindestens 0,06 mm, bevorzugt 0,06-0,2 mm, besonders bevorzugt 0,06-0,15 mm, aufweisen.

12. Unterdeckbahn (10) nach einem der vorhergehenden Ansprüche,
wobei die Dichtschicht (14) oder die Dichtschichten (14.1, 14.2) eine mittlere Massen-Flächendichte von mindestens 60 g/m², bevorzugt 60 bis 200 g/m², besonders bevorzugt 60 bis 150 g/m² aufweisen.

13. Dach mit einer Mehrzahl überlappend verlegter und verschweißter, wasserdichter und wasserdampfdurchlässiger Unterdeckbahnen (10.1, 10.2) nach einem der vorhergehenden Ansprüche.

14. Dach nach Anspruch 13, wobei eine (10.1) der Unterdeckbahnen (10.1) mit einer benachbarten (10.2) der Unterdeckbahnen im Wesentlichen über ihre gesamte überlappende Fläche (19) verschweißt ist.

## Claims

1. Underlay (10) for a sloping roof with a water-permeable and water vapour-permeable carrier layer (12) and a water-tight and water vapour-permeable sealing layer (14, 14.1, 14.2) based on TPU, **characterised in that** the carrier layer (12) comprises a fibrous material which has essentially no capillary ascension with respect to water, wherein the property of the fibrous material, to have essentially no capillary ascension with respect to water, is determined by a method in which a 10 to 30 mm wide and 20 cm long test strip of the fibrous material to be tested for suitability is produced and placed in a water bath of 20 ° filled to a height of 10 cm so that at least 5 cm of the strip lie in the water, the fibrous material strip is thus placed in the water bath on a tilted plane at an angle of inclination of about 5 degrees to the horizontal and after 24-hour storage of the test strip in the water bath, the capillary-related rise is measured along the length of the fibrous material strip, wherein the fibrous material is defined as having essentially no capillary ascension with respect to water when in this investigation a capillary-related rise of water in the fibrous material, measured starting from the water level, of less than 5 cm is produced.

2. Underlay (10) according to claim 1, wherein the carrier layer (12) comprises a fibrous material of 80-200 g/m² in weight.

3. Underlay (10) according to one of the preceding claims, wherein the fibrous material is a non-woven, a mesh, a woven fabric, a knitted fabric, a knit fabric or a combination of these materials, preferably a non-woven.

4. Underlay (10) according to one of the preceding claims, wherein the carrier layer (12) comprises a fibrous material which has polyester fibres and a proportion of 0 wt.% to 50 wt.% of PP fibres.

5. Underlay (10) according to one of the preceding claims, wherein the carrier layer (12) comprises a fibrous material which has 25 wt.% to 100 wt.% hydrophobic fibres.

6. Underlay (10) according to one of the preceding claims, wherein the carrier layer (12) has at least one side finished hydrophobically, in particular with fluorocarbons, silicones or paraffins, or chemically, in particular with a fluorocarboxylic acid.

7. Underlay (10) according to one of the preceding claims, wherein the underlay (10) is free of adhesive.

8. Underlay according to one of claims 1 to 7, wherein the thickness of the sealing layer (14) has dimensions such that the underlay (10) can be united to be water-tight and water vapour-permeable with a further similar underlay (10) by thermal welding and/or by solvent welding, wherein the underlay (10) has a water-tight and water vapour-permeable connecting strip (16) along at least one of the edges of the carrier layer (12) which projects beyond this at least one edge.

9. Underlay (10) according to claim 8, wherein the connecting strip (16) is a strip based on TPU.

10. Underlay (10) according to one of claims 1 to 7, which has two water-tight and water vapour-impermeable sealing layers (14.1, 14.2), wherein the thickness of the sealing layers (14.1, 14.2) has dimensions such that the underlay (10) can be united to be water-tight and water vapour-permeable with a further similar underlay (10) by thermal welding and/or by solvent welding, wherein the carrier layer is provided at least in some regions on both sides, preferably on both sides and over the entire surface, with a sealing layer (14.1, 14.2).

11. Underlay (10) according to one of the preceding claims, wherein the sealing layer (14) or the sealing layers (14.1, 14.2) have a thickness of at least 0.06 mm, preferably 0.06-0.2 mm, particularly preferably 0.06-0.15 mm.

12. Underlay (10) according to one of the preceding claims, wherein the sealing layer (14) or the sealing layers (14.1, 14.2) have an average mass surface density of at least 60 g/m², preferably 60 to 200 g/m², particularly preferably 60 to 150 g/m².

13. Roof with a plurality of water-tight and water vapour-permeable underlays (10.1, 10.2) welded and laid to be overlapping according to one of the preceding claims.

14. Roof according to claim 13, wherein one (10.1) of the underlays (10.1) is welded to an adjacent (10.2) of the underlays essentially over its entire overlapping surface (19).

## Revendications

1. Ecran de sous-toiture (10) pour un toit en pente, comportant une couche de support (12) perméable à l'eau et à la vapeur d'eau et
une couche d'étanchéité (14, 14.1, 14.2) imperméable à l'eau et perméable à la vapeur d'eau, à base de TPU,
**caractérisé en ce que**
la couche de support (12) comprend un matériau fibreux ne présentant sensiblement aucune ascension capillaire par rapport à l'eau,
la propriété du matériau fibreux de ne présenter sensiblement aucune ascension capillaire par rapport à l'eau étant déterminée au moyen d'un procédé, où
une bande de test large de 10 à 30 mm et longue de 20 cm de matériau fibreux à tester quant à sa propriété est fabriquée, et plongée dans un bain d'eau à 20 °C rempli sur une hauteur de 10 cm de telle manière qu'au moins 5 cm de la bande soit immergée dans l'eau,
la bande de matériau fibreux est introduite à cet effet dans le bain d'eau sur un plan incliné, suivant un angle d'inclinaison de 5 degrés environ par rapport à l'horizontale, et où
après un séjour de 24 heures de la bande de test dans le bain d'eau, la hauteur d'ascension capillaire est mesurée sur la longueur de la bande de matériau fibreux,
le matériau fibreux étant défini comme ne présentant sensiblement aucune ascension capillaire par rapport à l'eau s'il résulte de cet examen que la hauteur d'ascension capillaire de l'eau dans le matériau fibreux, mesurée depuis le niveau de l'eau, est inférieure à 5 cm.

2. Ecran de sous-toiture (10) selon la revendication 1, où
la couche de support (12) comprend un matériau fibreux de densité surfacique comprise entre 80 et 200 g/m².

3. Ecran de sous-toiture (10) selon l'une des revendications précédentes, où le matériau fibreux est un voile non tissé, un treillis, un tissu, une étoffe à mailles, une étoffe tricotée ou une combinaison de ces étoffes, de préférence un voile non tissé.

4. Ecran de sous-toiture (10) selon l'une des revendications précédentes,
où la couche de support (12) comprend un matériau fibreux contenant des fibres de polyester et des fibres PP dans une proportion de 0 % à 50 % en poids.

5. Ecran de sous-toiture (10) selon l'une des revendications précédentes, où
la couche de support (12) comprend un matériau fibreux contenant des fibres hydrophobes dans une proportion de 25 % à 100 % en poids.

6. Ecran de sous-toiture (10) selon l'une des revendications précédentes, où
la couche de support (12) présente au moins une face traitée pour être hydrophobe, en particulier avec des fluorocarbones, silicones ou paraffines, ou traitée chimiquement, en particulier avec un acide fluorocarboxylique.

7. Ecran de sous-toiture (10) selon l'une des revendications précédentes,
où ledit écran de sous-toiture (10) est exempt d'adhésifs.

8. Ecran de sous-toiture selon l'une des revendications 1 à 7,
où l'épaisseur de la couche d'étanchéité (14) est prévue de telle manière que l'écran de sous-toiture (10) peut être assemblé de manière imperméable à l'eau et perméable à la vapeur d'eau avec un autre écran de sous-toiture (10) similaire, par thermosoudage et/ou par soudage au solvant,
où l'écran de sous-toiture (10) comporte une bande de raccordement (16) imperméable à l'eau et perméable à la vapeur d'eau le long d'au moins un de bords de la couche de support (12), laquelle dépasse dudit ou desdits bords.

9. Ecran de sous-toiture (10) selon la revendication 8,
où la bande de raccordement (16) est une bande à base de TPU.

10. Ecran de sous-toiture (10) selon l'une des revendications 1 à 7, présentant deux couches d'étanchéité (14.1, 14.2) imperméables à l'eau et perméables à la vapeur d'eau,
où l'épaisseur des couches d'étanchéité (14.1, 14.2) est prévue de telle manière que l'écran de sous-toiture (10) peut être assemblé de manière imperméable à l'eau et perméable à la vapeur d'eau avec un autre écran de sous-toiture (10) similaire, par thermosoudage et/ou par soudage au solvant,
où la couche de support est pourvue d'une couche d'étanchéité (14.1, 14.2) au moins partiellement sur ses deux faces, préférentiellement sur ses deux faces et sur toute sa surface.

11. Ecran de sous-toiture (10) selon l'une des revendications précédentes,
où la couche d'étanchéité (14) ou les couches d'étanchéité (14.1, 14.2) ont une épaisseur d'au moins 0,06 mm, préférentiellement comprise entre 0,06 et 0,2 mm, et tout particulièrement entre 0,06 et 0,15 mm.

12. Ecran de sous-toiture (10) selon l'une des revendications précédentes,
où la couche d'étanchéité (14) ou les couches d'étanchéité (14.1, 14.2) ont une densité surfacique moyenne d'au moins 60 g/m², préférentiellement comprise entre 60 et 200 g/m², et tout particulièrement entre 60 et 150 g/m².

13. Toit, comportant une pluralité d'écrans de sous-toiture (10.1, 10.2) imperméables à l'eau et perméables à la vapeur d'eau selon l'une des revendications précédentes, posés en chevauchement et soudés l'un à l'autre.

14. Toit selon la revendication 13, où un (10.1) des écrans de sous-toiture (10.1) est soudé sensiblement sur toute sa surface de chevauchement (19) avec un des écrans de sous-toiture (10.2) adjacents.
